# EUROPÄISCHE PATENTSCHRIFT

(11) **EP 0 903 663 B1**
(45) Veröffentlichungstag und Bekanntmachung des Hinweises auf die Patenterteilung: **18.02.2004**
(21) Anmeldenummer: 98115903.1
(22) Anmeldetag: 24.08.1998
(51) Int. Cl.: G06F 5/06, G06F 9/355

(54) **Anordnung mit einem Umlaufspeicher und mit eine Einrichtung, welche ein auf den Umlaufspeicher zugreifendes Programm ausführt**
Apparatus comprising a circular buffer and an arrangement carrying out a programm accessing said circular buffer
Dispositif comprenant un tampon circulaire et un appareil exécutant un programme qui accède audit tampon circulaire

(30) Priorität: 18.09.1997 DE 19741213
(43) Veröffentlichungstag der Anmeldung: 24.03.1999
(73) Patentinhaber: Infineon Technologies AG, 81669 München (DE)
(72) Erfinder: Wenzel, Andreas, 81371 München (DE)
(74) Vertreter: Jannig, Peter, Dipl.-Ing.

(56) Entgegenhaltungen:
- US-A- 4 800 524
- US-A- 5 519 701
- US-A- 5 659 698
- "EFFICIENT DUAL-PORT FIRST-IM, FIRST-OUT BUFFER WITH AN OVERRUN AND UNDERRUN DETECTION SCHEME" IBM TECHNICAL DISCLOSURE BULLETIN,US,IBM CORP. NEW YORK, Bd. 33, Nr. 12, Seite 370-371 XP000121692 ISSN: 0018-8689
- "CLOSEST-TO-COMPLETION LOGIC TO STORE FINISHED PROGRAM EXCEPTION CODES" IBM TECHNICAL DISCLOSURE BULLETIN,US,IBM CORP. NEW YORK, Bd. 36, Nr. 4, Seite 87-89 XP000364450 ISSN: 0018-8689

## Beschreibung

Die vorliegende Erfindung betrifft ein Verfahren gemäß dem Oberbegriff des Patentanspruchs 1 und eine Vorrichtung gemäß dem Oberbegriff des Patentanspruchs 7.

Über Schreib- und/oder Lesezeiger (Schreib- und/oder Lesepointer) adressierbare Umlaufspeicher, welche auch als circular buffers oder memories bezeichnet werden, basieren auf "normalen", zur Datenspeicherung ausgelegten Speichereinrichtungen oder Speicherbereichen; allerdings werden - anders als bei den normalen Speichern - die Schreib- und/oder Lesezeiger derart verwaltet, daß sie beim Überschreiten des Speicherbereichsendes automatisch auf den Speicherbereichsanfang, und beim Überschreiten des Speicherbereichsanfanges automatisch auf das Speicherbereichsende gesetzt werden und dadurch den den Umlaufspeicher bildenden Speicherbereich nie verlassen können.

Derartige Umlaufspeicher sind seit langem bekannt und bedürfen keiner näheren Erläuterung.

Eine einen solchen Umlaufspeicher enthaltende Anordnung ist in 'EFFICIENT DUAL-PORT FIRST-IM, FIRST-OUT BUFFER WITH AN OVERRUN AND UNDERRUN DETECTION SCHEME' IBM TECHNICAL DISCLOSURE BULLETIN,US,IBM CORP. NEW YORK, Bd. 33, Nr. 12, Seite 370-371 XP000121692 ISSN: 0018-8689; beschrieben.

Die Verwendung von Umlaufspeichern erweist sich insbesondere bei regelmäßig wiederkehrenden oder wiederholten Schreibund/oder Lesevorgängen als vorteilhaft, weil dadurch der zur Verfügung stehende Speicher besonders effizient genutzt werden kann und das Einschreiben und Auslesen von Daten mangels aufwendiger Schreib- und Leseadreßverwaltung besonders schnell und unkompliziert erfolgen kann.

Regelmäßig wiederkehrende oder wiederholte Schreib- und Lesevorgänge treten unter anderem, aber selbstverständlich bei weitem nicht ausschließlich in der digitalen Signalverarbeitung auf, da dort wegen der regelmäßigen Struktur der verwendeten Algorithmen relativ viele Programmschleifen zu durchlaufen sind.

Der Durchlauf dieser Programmschleifen muß insbesondere dann, wenn die eingegebenen Daten bzw. Signale schritthaltend (in Echtzeit) verarbeitet werden sollen, besonders schnell erfolgen. Die Erfahrung zeigt, daß dies selbst bei Verwendung von Umlaufspeichern als Speichereinrichtungen nicht ohne weiteres möglich ist.

Der vorliegenden Erfindung liegt daher die Aufgabe zugrunde, das Verfahren gemäß dem Oberbegriff des Patentanspruchs 1 bzw. die Vorrichtung gemäß dem Oberbegriff des Patentanspruchs 7 derart weiterzubilden, daß diese eine noch schnellere und/oder einfachere Daten- oder Signalverarbeitung ermöglichen.

Diese Aufgabe wird erfindungsgemäß durch das in Patentanspruch 1 beanspruchte Verfahren bzw. durch die in Patentanspruch 7 beanspruchte Vorrichtung gelöst.

Dadurch kann das Führen und Auswerten eines die Programmschleifen-Durchläufe zählenden (hard- und/oder softwaremäßig realisierten) Schleifenzählers, anhand dessen das Programmschleifenende bisher erkannt wurde, entfallen.

Der Programmablauf und damit auch die dadurch erfolgende Daten- oder Signalverarbeitung können auf diese Weise erheblich schneller und/oder einfacher erfolgen als es bisher der Fall ist.

Vorteilhafte Weiterbildungen der Erfindung sind Gegenstand der Unteransprüche.

Die Erfindung wird nachfolgend anhand eines Ausführungsbeispiels unter Bezugnahme auf die Zeichnung näher erläutert. Es zeigen
- Figur 1: eine schematische Darstellung zur Veranschaulichung der in einer ersten Programmschleife stattfindenden Vorgänge,
- Figur 2: eine schematische Darstellung zur Veranschaulichung der Vorgänge, die bei der sich anschließenden Ausführung einer zweiten Programmschleife stattfinden, und
- Figur 3: eine schematische Darstellung zur Veranschaulichung der Vorgänge, die bei der sich anschließenden Ausführung einer dritten Programmschleife stattfinden.

Der im folgenden näher beschriebene Umlaufspeicher (circular buffer bzw. circular memory) ist Bestandteil eines Microcontrollers und dient dort zur Implementation einer Fast Loop insbesondere für DSP(Digitale Signalprozessor)-Applikationen.

Es sei jedoch bereits an dieser Stelle darauf hingewiesen, daß der Einsatz des beschriebenen circular buffer hierauf nicht beschränkt ist. Er kann auch als separates Element oder Bestandteil beliebiger anderer Einrichtungen ausgebildet sein und ist grundsätzlich für beliebige Zwecke einsetzbar.

Der circular buffer zeichnet sich durch eine Signalisierungseinrichtung aus, welche dazu ausgelegt ist, den Sprung des Schreib- und/oder des Lesezeigers vom Speicherende zum Speicheranfang und/oder umgekehrt zu signalisieren. Die Signalisierung wird vorzugsweise von einer die Schreib- und/oder Lesezeiger erzeugenden oder verwaltenden Adreßgenerierungseinheit veranlaßt.

Die Signalisierung besteht im betrachteten Beispiel im Setzen oder Rücksetzen oder Umschalten einer Kennung (Flag). Es kann grundsätzlich aber auch auf beliebige andere Art und Weise erfolgen. Wichtig für das vorliegend betrachtete Beispiel ist, daß die Signalisierung in einer Art und Weise erfolgt, die es ermöglicht, daß diese von einem auf den circular buffer zugreifenden Programm wahrnehmbar, insbesondere als Bedingung für einen bedingten Sprungbefehl verwendbar ist.

Die Kennung wird im betrachteten Beispiel zur Steuerung des Ablaufes eines auf den circular buffer zugreifenden Programms verwendet.

Das Programm möge zur Filterung von Audio-, Video- oder sonstige Signale repräsentierenden Daten ausgelegt sein. Hierzu müssen die Daten mit einer Vielzahl von Koeffizienten multipliziert werden.

Die Daten und die Koeffizienten sind in separaten circular buffers gespeichert. Der im folgenden als Datenpuffer D bezeichnete circular buffer weist n Speicherabschnitte zur Speicherung von n Datenworten d₀ bis dₙ₋₁ auf; der im folgenden als Koeffizientenpuffer K bezeichnete circular buffer weist n Speicherabschnitte zur Speicherung von n Koeffizienten k₀ bis kₙ₋₁ auf. Jedes der n Datenworte d₀ bis dₙ₋₁ soll mit jedem der n Koeffizienten k₀ bis kₙ₋₁ multipliziert werden.

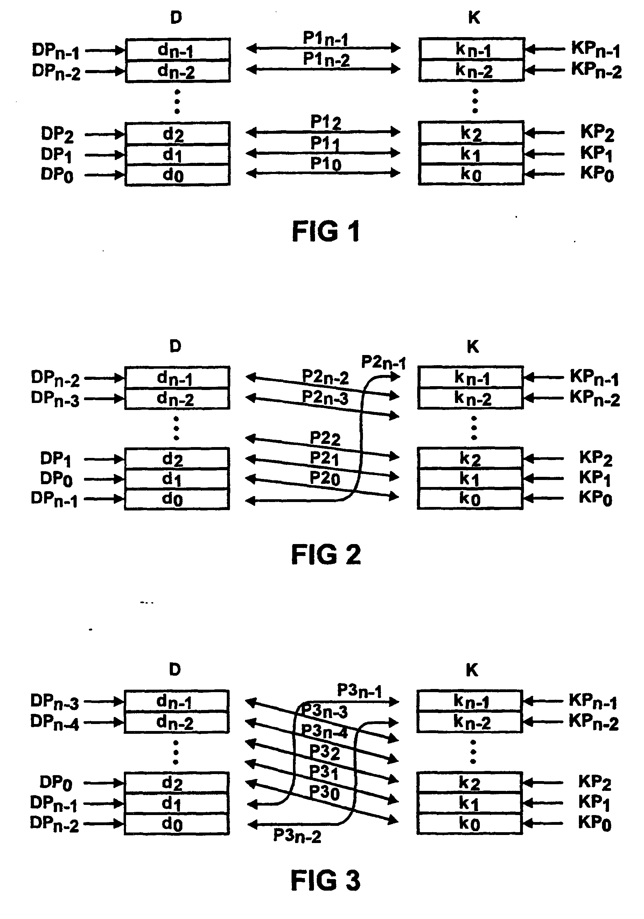

Dies geschieht durch Ausführung von n Programmschleifen, von welchen die erste, die zweite und die dritte schematisch in den Figuren 1 bis 3 veranschaulicht sind.

Bei der in der Figur 1 veranschaulichten ersten Programmschleife werden die Produkte d₀*k₀, d₁*k₁, ... und dₙ₋₁*kₙ₋₁ gebildet. Welches Datenwort mit welchem Koeffizienten multipliziert wird, ist in der Figur 1 durch Doppelpfeile P1₀ bis P1ₙ₋₁ gekennzeichnet, wobei die Indizes angeben, in welcher Reihenfolge die jeweiligen Multiplikationen durchgeführt werden. Das Datenwort und der Koeffizient, die es jeweils miteinander zu multiplizieren gilt, werden über Datenpointer DP₀ bis DPₙ₋₁ bzw. Koeffizientenpointer KP₀ bis KPₙ₋₁ ausgewählt, wobei die Indizes der jeweiligen Pointer die Reihenfolge angeben, in welcher diese aufeinanderfolgen.

Beim ersten Durchlauf der in der Figur 1 veranschaulichten Programmschleife werden das durch den Datenpointer DP₀ adressierte Datenwort, also das Datenwort d₀, und der durch den Koeffizientenpointer KP₀ adressierte Koeffizient, also der Koeffizient k₀ miteinander multipliziert. Der Datenpointer und der Koeffizientenpointer werden danach inkrementiert, so daß im dem sich an den ersten Programmschleifendurchlauf anschließenden zweiten Programmschleifendurchlauf das durch den Datenpointer DP₁ adressierte Datenwort, also das Datenwort d₁, und der durch den Koeffizientenpointer KP₁ adressierte Koeffizient, also der Koeffizient k₁ miteinander multipliziert werden. Dieser Vorgang wiederholt sich, bis schließlich in einem n-ten Programmschleifendurchlauf das durch den Datenpointer DPₙ₋₁ adressierte Datenwort, also das Datenwort dₙ₋₁, und der durch den Koeffizientenpointer KPₙ₋₁ adressierte Koeffizient, also der Koeffizient kₙ₋₁ miteinander multipliziert werden. Wenn danach erneut der Datenpointer und der Koeffizientenpointer inkrementiert werden, springen sie, da sie sich jeweils am Ende der die circular buffers D und K bildenden Speicherbereiche befinden, automatisch an den Anfang der jeweiligen Speicherbereiche zurück. Der Rücksprung oder der unmittelbar bevorstehende Rücksprung des Koeffizientenpointers löst dabei eine den Rücksprung signalisierende Aktion aus, welche, wie vorstehend bereits erwähnt wurde, beim betrachteten Beispiel im Setzen, Rücksetzen oder Umschalten einer Kennung besteht.

Nach jedem Programmschleifendurchlauf (vor dem jeweils nächsten Programmschleifendurchlauf) wird jeweils überprüft, ob durch den Zustand der besagten Kennung ein Rücksprung des Koeffizientenpointers signalisiert wird. Ist dies der Fall, so wird kein nächster Programmschleifendurchlauf mehr durchgeführt, die Durchführung der Programmschleife also beendet. Im Anschluß daran wird der Datenpointer inkrementiert und zeigt dadurch auf das nächste Datenwort (das Datenwort d₁).

Ausgehend von diesem Zustand (der Datenpointer zeigt auf das Datenwort d₁, der Koeffizientenpointer zeigt auf den Koeffizienten k₀) wird die in der Figur 2 veranschaulichte zweite Programmschleife durchgeführt. In dieser zweiten Programmschleife werden die Produkte d₁*k₀, d₂*k₁, ... und d₀*kₙ₋₁ gebildet. Welches Datenwort mit welchem Koeffizienten multipliziert wird, ist in der Figur 2 durch Doppelpfeile P2₀ bis P2ₙ₋₁ gekennzeichnet, wobei die Indizes angeben, in welcher Reihenfolge die jeweiligen Multiplikationen durchgeführt werden. Das Datenwort und der Koeffizient, die es jeweils miteinander zu multiplizieren gilt, werden wiederum über die Datenpointer DP₀ bis DPₙ₋₁ bzw. Koeffizientenpointer KP₀ bis KPₙ₋₁ ausgewählt, wobei die Indizes der jeweiligen Pointer die Reihenfolge angeben, in welcher diese aufeinanderfolgen.

Beim ersten Durchlauf der in der Figur 2 veranschaulichten Programmschleife werden das durch den Datenpointer DP₀ adressierte Datenwort, also das Datenwort d₁, und der durch den Koeffizientenpointer KP₀ adressierte Koeffizient, also der Koeffizient k₀ miteinander multipliziert. Der Datenpointer und der Koeffizientenpointer werden danach inkrementiert, so daß im dem sich an den ersten Programmschleifendurchlauf anschließenden zweiten Programmschleifendurchlauf das durch den Datenpointer DP₁ adressierte Datenwort, also das Datenwort d₂, und der durch den Koeffizientenpointer KP₁ adressierte Koeffizient, also der Koeffizient k₁ miteinander multipliziert werden. Dieser Vorgang wiederholt sich, bis schließlich in einem n-ten Programmschleifendurchlauf das durch den Datenpointer DPₙ₋₁ adressierte Datenwort, also das Datenwort d₀, und der durch den Koeffizientenpointer KPₙ₋₁ adressierte Koeffizient, also der Koeffizient kₙ₋₁ miteinander multipliziert werden.

Wenn danach erneut der Datenpointer und der Koeffizientenpointer inkrementiert werden, springt der Koeffizientenpointer, da er sich am Ende des den circular buffer K bildenden Speicherbereichs befindet, automatisch an den Anfang des Speicherbereichs zurück; der Datenpointer hat den Rücksprung schon vorher (vor dem n-ten Programmschleifendurchlauf) ausgeführt. Der Rücksprung oder der unmittelbar bevorstehende Rücksprung des Koeffizientenpointers löst dabei wieder das Setzen, Rücksetzen oder Umschalten der solche Ereignisse signalisierenden Kennung aus.

Ergibt die wie bei der ersten Programmschleife erfolgende Überprüfung des Zustandes der besagten Kennung, daß durch diese ein Rücksprung des Koeffizientenpointers signalisiert wird, so wird kein nächster Programmschleifendurchlauf mehr durchgeführt, die Durchführung der Programmschleife also beendet. Im Anschluß daran wird der Datenpointer inkrementiert und zeigt dadurch auf das nächste Datenwort (das Datenwort d₂).

Ausgehend von diesem Zustand (der Datenpointer zeigt auf das Datenwort d₂, der Koeffizientenpointer zeigt auf den Koeffizienten k₀) wird die in der Figur 3 veranschaulichte dritte Programmschleife durchgeführt. In dieser dritten Programmschleife werden die Produkte d₂*k₀, d₃*k₁, ... und d₁*kₙ₋₁ gebildet. Welches Datenwort mit welchem Koeffizienten multipliziert wird, ist in der Figur 3 durch Doppelpfeile P3₀ bis P3ₙ₋₁ gekennzeichnet, wobei die Indizes angeben, in welcher Reihenfolge die jeweiligen Multiplikationen durchgeführt werden. Das Datenwort und der Koeffizient, die es jeweils miteinander zu multiplizieren gilt, werden wiederum über die Datenpointer DP₀ bis DPₙ₋₁ bzw. Koeffizientenpointer KP₀ bis Kpₙ₋₁ ausgewählt, wobei die Indizes der jeweiligen Pointer die Reihenfolge angeben, in welcher diese aufeinanderfolgen.

Beim ersten Durchlauf der in der Figur 3 veranschaulichten Programmschleife werden das durch den Datenpointer DP₀ adressierte Datenwort, also das Datenwort d₂, und der durch den Koeffizientenpointer KP₀ adressierte Koeffizient, also der Koeffizient k₀ miteinander multipliziert. Der Datenpointer und der Koeffizientenpointer werden danach inkrementiert, so daß im dem sich an den ersten Programmschleifendurchlauf anschließenden zweiten Programmschleifendurchlauf das durch den Datenpointer DP₁ adressierte Datenwort, also das Datenwort d₃, und der durch den Koeffizientenpointer KP₁ adressierte Koeffizient, also der Koeffizient k₁ miteinander multipliziert werden. Dieser Vorgang wiederholt sich, bis schließlich in einem n-ten Programmschleifendurchlauf das durch den Datenpointer DPₙ₋₁ adressierte Datenwort, also das Datenwort d₁, und der durch den Koeffizientenpointer KPₙ₋₁ adressierte Koeffizient, also der Koeffizient kₙ₋₁ miteinander multipliziert werden.

Wenn danach erneut der Datenpointer und der Koeffizientenpointer inkrementiert werden, springt der Koeffizientenpointer, da er sich am Ende des den circular buffer K bildenden Speicherbereichs befindet, automatisch an den Anfang des Speicherbereichs zurück; der Datenpointer hat den Rücksprung schon vorher (vor dem n-1-ten Programmschleifendurchlauf) ausgeführt. Der Rücksprung oder der unmittelbar bevorstehende Rücksprung des Koeffizientenpointers löst dabei wieder das Setzen, Rücksetzen oder Umschalten der solche Ereignisse signalisierenden Kennung aus.

Ergibt die wie auch bei den vorstehend beschriebenen Programmschleifen durchgeführte Überprüfung des Zustandes der besagten Kennung, daß durch diese ein Rücksprung des Koeffizientenpointers signalisiert wird, so wird kein nächster Programmschleifendurchlauf mehr durchgeführt, die Durchführung der Programmschleife also beendet.

Bis alle Datenworte mit allen Koeffizienten multipliziert sind, müssen weitere, genauer gesagt insgesamt n Programmschleifen ausgeführt werden, wobei die Ausführung der Programmschleifen jeweils beendet wird, wenn der Rücksprung der Koeffizientenpointers signalisiert wird.

Die Auslegung oder die Verwendung des Koeffizientenpuffers K in einer Art und Weise, daß der Sprung des Koeffizientenpointers und/oder ein sonstiges definiertes Verhalten desselben als Abbruchbedingung einer gerade ausgeführten Programmschleife verwendet werden kann, ermöglicht einen Verzicht auf das Führen und Überprüfen eines Schleifenzählers. Der Verzicht auf den Schleifenzähler oder vergleichbare (hard- oder softwaremäßig realisierte) Einrichtungen erweist sich in mehrfacher Hinsicht als vorteilhaft: einerseits lassen sich die Programmschleifen mit geringerem Aufwand und/oder schneller abarbeiten (weil das Initialisieren und das bei jedem Schleifendurchlauf erforderliche Verändern des Schleifenzählerstandes entfallen kann), und andererseits können Programmunterbrechungen wie Interrupts und dergleichen einfacher und schneller gehandhabt werden (weil kein Schleifenzähler mehr im Stack zwischengespeichert werden muß).

Die zum Befehlen von Programmschleifen üblicherweise verwendeten Schleifenbefehle können durch bedingte Sprungbefehle ersetzt werden.

Der Koeffizientenpointer definiert im betrachteten Beispiel jeweils die Stelle, von welcher der nächste Koeffizient zu lesen ist; es handelt sich also um einen reinen Lesezeiger. Demnach ist das was signalisiert wird, der Rücksprung eines Lesezeigers vom Ende des den Koeffizientenpuffer bildenden Speicherbereiches auf den Anfang desselben. Alternativ oder zusätzlich können auch ein Sprung des Lesezeigers vom Anfang des den Koeffizientenpuffer bildenden Speicherbereiches auf dessen Ende und/oder Sprünge eines kombinierten Schreib-/Lesezeigers oder eines Schreibzeigers signalisiert werden. Dabei können die Sprünge des Schreibzeigers und des Lesezeigers und/oder Sprünge derselben vom Speicherende zum Speicheranfang und vom Speicheranfang zum Speicherende gleich oder unterschiedlich signalisiert werden.

Die Signalisierung eines Schreib- und/oder Lesezeigersprunges kann automatisch nach Ablauf einer vorbestimmten Zeit, auf Veranlassung des die Signalisierung abfragenden bzw. auswertenden Programmes oder Schaltungsabschnittes oder im Ansprechen auf sonstige Ereignisse deaktiviert, zurückgenommen oder zurückgesetzt werden.

## Patentansprüche

1. Verfahren zum Betreiben einer Anordnung mit
- einem über einen Schreibzeiger und einen Lesezeiger (DPₓ, KPₓ) adressierbaren Umlaufspeicher (D, K),
- einer Einrichtung, welche ein auf den Umlaufspeicher (D, K) zugreifendes Programm ausführt, und
- einer Signalisierungseinrichtung, durch welche ein Sprung des Schreibzeigers oder des Lesezeigers (DPₓ, KPₓ) vom Speicherende zum Speicheranfang oder umgekehrt signalisiert wird,
**dadurch gekennzeichnet,**
**daß** der Umlaufspeicher (D, K) derart ausgelegt wird, daß der Sprung des Schreibzeigers oder des Lesezeigers (DPₓ, KPₓ) vom Speicherende zum Speicheranfang oder umgekehrt mit dem bestimmungsgemäßen Ende einer Programmschleife des auf den Umlaufspeicher (D, K) zugreifenden Programmes zusammenfällt, und daß die Signalisierung des Sprunges des Schreibzeigers oder des Lesezeigers (DPₓ, KPₓ) vom Speicherende zum Speicheranfang oder umgekehrt als Abbruchbedingung für die Programmschleife verwendet wird.

2. Verfahren nach Anspruch 1,
**dadurch gekennzeichnet,**
**daß** die Signalisierung des Sprunges des Schreibzeigers oder des Lesezeigers (DPₓ, KPₓ) vom Speicherende zum Speicheranfang oder umgekehrt durch ein Setzen, Rücksetzen oder Umschalten einer Kennung erfolgt.

3. Verfahren nach Anspruch 2,
**dadurch gekennzeichnet,**
**daß** die Kennung auf externe Veranlassung hin in einen keinen Sprung des Schreibzeigers oder des Lesezeigers (DPₓ, KPₓ) signalisierenden Zustand versetzbar ist.

4. Verfahren nach einem der vorhergehenden Ansprüche,
**dadurch gekennzeichnet,**
**daß** Sprünge des Schreibzeigers vom Speicherende zum Speicheranfang oder umgekehrt, und Sprünge des Lesezeigers (DPₓ, KBₓ) vom Speicherende zum Speicheranfang oder umgekehrt unterschiedlich signalisiert werden.

5. Verfahren nach einem der vorhergehenden Ansprüche,
**dadurch gekennzeichnet,**
**daß** Sprünge des Schreibzeigers oder des Lesezeigers (DPₓ, KPₓ) vom Speicherende zum Speicheranfang und Sprünge des Schreibzeigers oder des Lesezeigers (DPₓ, KPₓ) vom Speicheranfang zum Speicherende unterschiedlich signalisiert werden.

6. Verfahren nach einem der vorhergehenden Ansprüche,
**dadurch gekennzeichnet,**
**daß** die Signalisierung des Sprunges des Schreibzeigers oder des Lesezeigers (DPₓ, KPₓ) vom Speicherende zum Speicheranfang oder umgekehrt von einer den Schreibzeiger oder den Lesezeiger erzeugenden oder verwaltenden Adreßgenerierungseinheit veranlaßt wird.

7. Anordnung mit
- einem über einen Schreibzeiger und einen Lesezeiger (DPₓ, KPₓ) adressierbaren Umlaufspeicher (D, K),
- einer Einrichtung, welche ein auf den Umlaufspeicher (D, K) zugreifendes Programm ausführt, und
- einer Signalisierungseinrichtung, durch welche ein Sprung des Schreibzeigers oder des Lesezeigers (DPₓ, KPₓ) vom Speicherende zum speicheranfang oder umgekehrt signalisiert wird,
**dadurch gekennzeichnet,**
**daß** der Umlaufspeicher (D, K) derart ausgelegt wird, daß der Sprung des Schreibzeigers oder des Lesezeigers (DPₓ, KPₓ) vom Speicherende zum Speicheranfang oder umgekehrt mit dem bestimmungsgemäßen Ende einer Programmschleife des auf den Umlaufspeicher (D, K) zugreifenden Programmes zusammenfällt, und daß die Signalisierung des Sprunges des Schreibzeigers oder des Lesezeigers (DPₓ, KPₓ) vom Speicherende zum Speicheranfang oder umgekehrt als Abbruchbedingung für die Programmschleife verwendet wird.

## Claims

1. Method for operating an arrangement having
- a circulating memory (D, K) which can be addressed via a write pointer and a read pointer (DPₓ, KPₓ),
- a device which executes a program which accesses the circulating memory (D, K), and
- a signalling device which signals a jump of the write pointer or of the read pointer (DPₓ, KPₓ) from the end of the memory to the beginning of the memory or vice versa,
**characterized**
**in that** the circulating memory (D, K) is designed in such a way that the jump of the write pointer or of the read pointer (DPₓ, KPₓ) from the end of the memory to the beginning of the memory or vice versa coincides with the intended end of a program loop of the program which accesses the circulating memory (D, K), and in that the signalling of the jump of the write pointer or of the read pointer (DPₓ, KPₓ) from the end of the memory to the beginning of the memory or vice versa is used as a termination condition for the program loop.

2. Method according to Claim 1
**characterized**
**in that** the signalling of the jump of the write pointer or of the read pointer (DPₓ, KPₓ) from the end of the memory to the beginning of the memory or vice versa is carried out by a setting, resetting or changeover of an identifier.

3. Method according to Claim 2
**characterized**
**in that**, the identifier, in response to external instigation, can be put into a state signalling no jump of the write pointer or of the read pointer (DPₓ, KPₓ).

4. Method according to one of the preceding claims,
**characterized**
**in that** jumps of the write pointer from the end of the memory to the beginning of the memory or vice versa and jumps of the read pointer (DPₓ, KPₓ) from the end of the memory to the beginning of the memory or vice versa are signalled differently.

5. Method according to one of the preceding claims,
**characterized**
**in that** jumps of the write pointer or of the read pointer (DPₓ, KPₓ) from the end of the memory to the beginning of the memory and jumps of the write pointer or of the read pointer (DPₓ, KPₓ) from the beginning of the memory to the end of the memory are signalled differently.

6. Method according to one of the preceding claims,
**characterized**
**in that** the signalling of the jump of the write pointer or of the read pointer (DPₓ, KPₓ) from the end of the memory to the beginning of the memory or vice versa is instigated by an address generation unit which generates or manages the write pointer or the read pointer.

7. Arrangement having
- a circulating memory (D, K) which can be addressed via a write pointer and a read pointer (DPₓ, KPₓ),
- a device which executes a program which accesses the circulating memory (D, K), and
- a signalling device which signals a jump of the write pointer or of the read pointer (DPₓ, KPₓ) from the end of the memory to the beginning of the memory or vice versa,
**characterized**
**in that** the circulating memory (D, K) is designed in such a way that the jump of the write pointer or of the read pointer (DPₓ, KPₓ) from the end of the memory to the beginning of the memory or vice versa coincides with the intended end of a program loop of the program which accesses the circulating memory (D, K), and in that the signalling of the jump of the write pointer or of the read pointer (DPₓ, KPₓ) from the end of the memory to the beginning of the memory or vice versa is used as a termination condition for the program loop.

## Revendications

1. Procédé de conduite d'un dispositif comprenant
- un tampon circulaire (D, K) adressable par un pointeur d'écriture et un pointeur de lecture (DPₓ, KPₓ),
- un appareil qui exécute un programme qui accède au tampon circulaire (D, K), et
- un appareil de signalisation, par lequel un saut du pointeur d'écriture ou du pointeur de lecture (DPₓ, KPₓ) de la fin du tampon au début du tampon ou inversement est signalé,
**caractérisé en ce que** le tampon circulaire (D, K) est conçu de telle, façon que le saut du pointeur d'écriture ou du pointeur de lecture (DPₓ, KPₓ) de la fin du tampon au début du tampon ou inversement coïncide avec la fin visée d'une boucle de programme du programme qui- accède au tampon circulaire (D, K) et **en ce que** la signalisation du saut du pointeur d'écriture ou du pointeur de lecture (DPₓ, KPₓ) de la fin du tampon au début du tampon ou inversement est utilisée comme condition d'arrêt pour la boucle de programme.

2. Procédé selon la revendication 1, **caractérisé en ce que** la signalisation du saut du pointeur d'écriture ou du pointeur de lecture (DPₓ, KPₓ) de la fin du tampon au début du tampon ou inversement se produit par l'établissement, la réinitialisation ou l'inversion d'un critère.

3. Procédé selon la revendication 2, **caractérisé en ce que** le critère est translatable sur une incitation externe en un état ne signalant aucun saut du pointeur d'écriture ou du pointeur de lecture (DPₓ, KPₓ).

4. Procédé selon l'une quelconque des revendications précédentes, **caractérisé en ce que** des sauts du pointeur d'écriture de la fin du tampon au début du tampon et inversement et des sauts du pointeur dé lecture (DPₓ, KPₓ) de la fin du tampon au début du tampon et inversement sont signalés de façon différente.

5. Procédé selon l'une quelconque des revendications précédentes, **caractérisé en ce que** des sauts du pointeur d'écriture ou du pointeur de lecture (DPₓ, KPₓ) de la fin du tampon au début du tampon et des sauts du pointeur d'écriture ou du pointeur de lecture (DPₓ, KPₓ) du début du tampon à la fin du tampon sont signalés de façon différente.

6. Procédé selon l'une quelconque des revendications précédentes, **caractérisé en ce que** la signalisation du saut du pointeur d'écriture ou du pointeur de lecture (DPₓ, KPₓ) de la fin du tampon au début du tampon ou inversement est provoqué par une unité de génération d'adresse produisant ou gérant le pointeur d'écriture ou le pointeur de lecture.

7. Dispositif comprenant
- un tampon circulaire (D, K) adressable par un pointeur d'écriture et un pointeur de lecture (DPₓ, KPₓ),
- un appareil qui exécute un programme qui accède au tampon circulaire (D, K), et
- un appareil de signalisation, par lequel un saut du pointeur d'écriture ou du pointeur de lecture (DPₓ, KPₓ) de la fin du tampon au début du tampon ou inversement est signalé,
**caractérisé en ce que** le tampon circulaire (D, K) est conçu de telle façon que le saut du pointeur d'écriture ou du pointeur de lecture (DPₓ, KPₓ) de la fin du tampon au début du tampon ou inversement coïncide avec la fin visée d'une boucle de programme du programme qui accède au tampon circulaire (D, K) et **en ce que** la signalisation du saut du pointeur d'écriture ou du pointeur de lecture (DPₓ, KPₓ) de la fin du tampon au début du tampon ou inversement est utilisée comme condition d'arrêt pour la boucle de programme.
